Europäisches Patentamt

European Patent Office

Office européen des brevets

(11) Numéro de publication : **0 027 771**
**B1**

(12) **FASCICULE DE BREVET EUROPÉEN**

(45) Date de publication du fascicule du brevet :
02.05.84

(21) Numéro de dépôt : **80401547.7**

(22) Date de dépôt : **30.10.80**

(51) Int. Cl.³ : **F 16 L 15/00, E 21 B 17/042**

(54) **Joint pour tubes destiné à l'industrie pétrolière.**

(30) Priorité : **30.10.79 FR 7926890**

(43) Date de publication de la demande :
**29.04.81 Bulletin 81/17**

(45) Mention de la délivrance du brevet :
**02.05.84 Bulletin 84/18**

(84) Etats contractants désignés :
**AT BE DE GB IT NL SE**

(56) Documents cités :
**FR-A- 1 127 712**
**FR-A- 2 359 353**
**US-A- 3 307 860**
**US-A- 3 489 437**

(73) Titulaire : **VALLOUREC Société Anonyme dite.**
**7, place du Chancelier Adenauer**
**F-75116 Paris (FR)**

(72) Inventeur : **Mantelle, Jean**
**Allée de l'Ermitage**
**F-59620 Aulnoye Aymeries (FR)**
Inventeur : **Trouillet, Georges**
**1, rue Hector Berlioz**
**F-59620 Aulnoye (FR)**

(74) Mandataire : **Nony, Michel**
**Cabinet Nony 29, rue Cambacérès**
**F-75008 Paris (FR)**

Joint pour tubes destiné à l'industrie pétrolière

La présente invention est relative à un joint pour tubes, plus spécialement pour tubes d'acier, qui est destiné en particulier à l'industrie pétrolière, notamment aux colonnes de cuvelage et de production de gisements pétroliers.

Les joints de ce type doivent présenter un certain nombre de qualités qui sont dans la pratique difficiles à concilier.

Ces joints doivent pouvoir supporter des différences de pression très importantes entre la paroi interne et la paroi externe de la colonne de tubes. Ils doivent également présenter une résistance mécanique comparable à celle des éléments tubulaires qu'ils sont destinés à réunir.

Compte tenu du fait que les colonnes de tubes munies de ces joints sont destinées à être placées dans des forages profonds, il est souhaitable que le diamètre du joint ne soit supérieur au diamètre du tube que de la valeur la plus réduite possible.

De tels joints doivent présenter également une étanchéité sûre, même après des vissages et dévissages répétés, une extrémité mâle donnée pouvant être montée à cette occasion sur différentes extrémités femelles et ceci malgré les tolérances de fabrications qui sont inhérentes à toute production industrielle.

Il est également souhaitable que les joints assurent dans toute la mesure du possible une auto-réparation des surfaces d'étanchéité car ces dernières sont relativement souvent soumises à des détériorations lors des manipulations sur chantier.

Le joint selon l'invention est du type dans lequel les extrémités de deux éléments mâles sont réunis à l'aide d'un manchon femelle, chaque élément mâle étant muni d'un filetage par exemple tronconique qui s'engage dans un filetage femelle correspondant pratiqué sur le manchon.

Le FR-A-2.359.353 décrit un joint du type précité qui comporte à l'extérieur de chacun des éléments mâles un épaulement contre lequel vient buter lors du serrage l'extrémité correspondante du manchon femelle. Ce brevet décrit également un joint de ce type, dans lequel les extrémités des éléments mâles viennent prendre appui par leur surface externe contre une surface d'étanchéité cylindrique réalisée à l'intérieur du manchon. En raison de la présence des épaulements disposés à l'extérieur des éléments mâles qui servent de surface de butée aux extrémités du manchon les extrémités des éléments mâles ne peuvent venir systématiquement en contact, en étant déportés vers l'extérieur pour assurer l'étanchéité.

Le US-A-3 489 437 décrit un joint du type dans lequel l'extrémité de l'élément mâle vient buter contre un épaulement pratiqué à l'intérieur de l'élément femelle. Ce joint nécessite comme le joint du FR-A-2.359.353 la réalisation d'un épaulement, ce qui a pour effet de compliquer la structure du joint et d'augmenter son coût de fabrication.

La présente invention vise à permettre l'obtention de manière simple et à faible coût d'un joint présentant une bonne étanchéité malgré les tolérances de fabrication. Ce résultat est obtenu par la combinaison d'un manchon fileté comportant à sa partie centrale une surface d'étanchéité cylindrique avec deux éléments mâles dont les extrémités viennent lors du serrage prendre appui l'une contre l'autre, la forme des extrémités des éléments mâles étant telle que le premier contact entre les éléments mâles s'effectue au voisinage de la surface d'étanchéité du manchon, l'espace existant entre deux points des extrémités des éléments mâles augmentant au fur et à mesure que l'on se rapproche du centre du tube.

Du FR-A-2.359.353 précité on connaît déjà un joint pour tubes, en particulier pour tubes d'acier, destiné plus particulièrement à l'exploitation des gisements pétroliers, du type dans lequel les extrémités munies d'un filetage, par exemple conique, de deux éléments mâles sont réunies par un manchon présentant de chaque côté un filetage correspondant et comportant dans sa partie centrale une surface interne d'étanchéité sensiblement cylindrique dont l'axe correspond à l'axe du joint, chaque élément mâle possédant à la périphérie latérale de son extrémité une surface d'étanchéité sensiblement cylindrique dont le diamètre est égal ou légèrement supérieur au diamètre de la surface interne d'étanchéité du manchon. Le joint selon la présente invention est caractérisé par le fait que les extrémités frontales des éléments mâles viennent prendre appui axialement l'une contre l'autre par leurs périphéries externes lors du serrage du joint et que l'espace existant lors de leur premier contact entre les zones extérieures des surfaces de contact desdites extrémités frontales est tel que l'espacement axial entre ces zones extérieures va en croissant de la périphérie vers l'axe du joint. De cette manière lors du serrage du joint les extrémités des éléments mâles sont repoussées vers l'extérieur pour renforcer l'étanchéité par augmentation de la pression sur les surfaces d'étanchéité des éléments mâles et du manchon.

Conformément à l'invention, on crée une pression de contact sur la périphérie externe des extrémités des éléments mâles qui viennent d'abord en contact au moment du serrage du joint. Tout serrage ultérieur tend d'une part à écraser l'une contre l'autre les surfaces frontales périphériques des extrémités des éléments mâles et d'autre part à repousser ces extrémités vers l'extérieur, en augmentant ainsi ladite pression de contact.

On voit donc que, conformément à l'invention, si l'on se place dans un plan passant par l'axe du joint, au point où les génératrices externes des surfaces d'étanchéité des éléments mâles se rejoignent, on a lors du premier contact, la moitié de l'espace qui est occupé par le manchon femelle dont la surface d'étanchéité est cylindrique, alors que l'autre moitié de l'espace n'est occupée que partiellement par l'extrémité des éléments mâles du fait que, conformément à l'invention, la distance qui sépare les extrémités des éléments mâles est nulle au point de contact extérieur pour prendre des valeurs croissantes vers l'intérieur du joint.

On conçoit, dans ces conditions, que lorsque l'on poursuit le serrage du joint on provoque un comblement partiel de l'espace résiduel existant entre les extrémités des éléments mâles en les repoussant vers l'extérieur, ce qui augmente leur pression sur la surface d'étanchéité du manchon par une sorte d'effet de genouillère.

A cet effet de genouillère s'ajoute d'ailleurs un effet de gonflement diamétral des éléments mâles, localisé dans la zone de pression de contact, qui se produit lorsqu'on exerce une contraction dans le sens axial. Cet effet apporte un surcroît de force de contact en sens radial qui s'ajoute au frettage initial ou qui peut même résorber un faible jeu initial.

Conformément à l'invention, les surfaces frontales des extrémités des éléments mâles peuvent avoir des formes diverses.

Les extrémités des éléments mâles peuvent être par exemple très légèrement coniques concaves, c'est-à-dire que l'extrémité de chaque élément mâle peut être délimité par une surface conique dont l'angle avec l'axe du joint est légèrement inférieur à 90°, les sommets des cônes étant dirigés vers l'intérieur des éléments mâles.

De cette manière, l'espace biconique existant entre les extrémités des éléments mâles lors du premier contact des éléments mâles se réduit progressivement lors du serrage par écrasement de la périphérie des extrémités des éléments mâles.

Dans un autre mode de réalisation préférée de l'invention, les surfaces d'extrémité des éléments mâles ont une forme biconique, la zone périphérique des extrémités des éléments mâles ayant une conicité dirigée en sens inverse de la conicité de leur zone interne.

Les conicités des zones périphériques des extrémités des deux éléments mâles destinés à être montés sur le même manchon sont telles que le premier contact entre les extrémités des éléments mâles s'effectue à la périphérie de ces derniers. Les extrémités des éléments mâles s'écrasent ensuite progressivement lors du serrage au voisinage du premier point de contact jusqu'à ce que les surfaces coniques de même conicité qui sont sur la zone interne des extrémités des éléments mâles, viennent prendre appui l'une contre l'autre pour constituer une butée.

Conformément à l'invention, il est préférable que la surface d'étanchéité cylindrique du manchon se prolonge en direction des filetages par une surface dont le diamètre s'élargit progressivement, de manière à permettre un engagement facile et un centrage automatique de l'extrémité des éléments mâles dont les surfaces d'étanchéité ont un diamètre égal ou supérieur au diamètre de la surface cylindrique d'étanchéité du manchon.

A cet effet, il est également préférable d'arrondir légèrement l'arête externe de l'extrémité de chaque élement mâle.

L'importance de cet arrondi peut cependant être très faible et correspondre uniquement à un très léger chanfrein de l'arête vive de l'extrémité des éléments mâles.

Dans une variante de l'invention, on peut placer deux anneaux d'étanchéité toriques, par exemple en PTFE (polytétrafluoréthylène), dans des gorges circulaires réalisées sur la surface cylindrique d'étanchéité du manchon de part et d'autre du point où les extrémités des éléments mâles viennent en contact.

Conformément à l'invention, il est également possible de placer une bague en PTFE dans une gorge pratiquée au voisinage de l'extrémité interne d'au moins un des éléments mâles.

Le joint selon l'invention présente l'avantage d'être d'une réalisation facile et économique.

Tout d'abord, il n'existe aucune butée de limitation de vissage sur le manchon qui, de ce fait, peut être usiné dans un tube moins épais.

Les surfaces d'étanchéité, tant sur le manchon que sur les extrémités des éléments mâles, sont des surfaces cylindriques dont l'usinage est particulièrement facile et économique. De plus, les contrôles de fabrication sont beaucoup plus faciles à effectuer et peuvent être réalisés avec des calibres dont le prix de revient est inférieur à ceux des calibres généralement utilisés pour les contrôles de fabrication des joints pour l'industrie pétrolière.

Dans le cas de colonnes de tubes destinés à contenir des liquides corrosifs à leur intérieur, il est possible de réaliser uniquement les éléments mâles en acier inoxydable par exemple, les manchons étant réalisés en acier ordinaire.

De même, on peut facilement, grâce au joint selon l'invention, réunir des tubes bimétalliques dont la partie située au voisinage de la surface interne est par exemple réalisée en acier inoxydable, alors que le reste du tube est réalisé en acier ordinaire. Dans ce cas, il est également préférable de réaliser les extrémités frontales des éléments mâles avec un revêtement de métal inoxydable identique ou compatible avec celui qui constitue la partie interne des tubes bimétalliques.

Les dimensions relatives des filetages et les longueurs des éléments mâles sont telles que les extrémités des éléments mâles peuvent venir en contact et réaliser les déformations qui permettent d'assurer l'étanchéité selon l'invention avant qu'un frettage trop important se soit produit au niveau des filetages.

Cependant, il est préférable selon l'invention que le frettage d'un élément mâle dans le manchon soit notablement supérieur au frettage de l'autre élément mâle dans le manchon de manière à s'assurer lors du montage et du démontage du joint, que le manchon reste toujours positionné sur le même élément mâle. Il suffit pour cela que le couple de serrage du manchon sur l'élément mâle qui ne doit pas être séparé du manchon soit d'une valeur notablement supérieure à la valeur du couple de serrage de l'autre élément mâle dans le manchon.

Il est intéressant, conformément à l'invention, de monter le manchon en usine sur l'élément mâle dont il ne doit pas être séparé.

On va maintenant décrire plusieurs modes de réalisation de l'invention qui sont représentés sur le dessin annexé dans lequel :

la figure 1 est une vue en coupe axiale d'une première forme de réalisation d'un joint selon l'invention après assemblage,

la figure 2 est une vue en coupe axiale du joint de la figure 1 en cours d'assemblage,

la figure 3 est une demi-vue en coupe axiale d'une deuxième forme de réalisation d'un joint selon l'invention avant son serrage complet,

la figure 4 est une demi-vue correspondant à la figure 3 après serrage complet du joint,

la figure 5 est une demi-vue en coupe axiale, à plus grande échelle, du joint des figures 1 et 2,

la figure 6 représente schématiquement les extrémités des éléments mâles du joint de la figure 5 lors de leur premier contact,

la figure 7 correspond à la figure 6 après serrage complet du joint,

les figures 8, 9 et 10 sont des variantes du joint selon la figure 1.

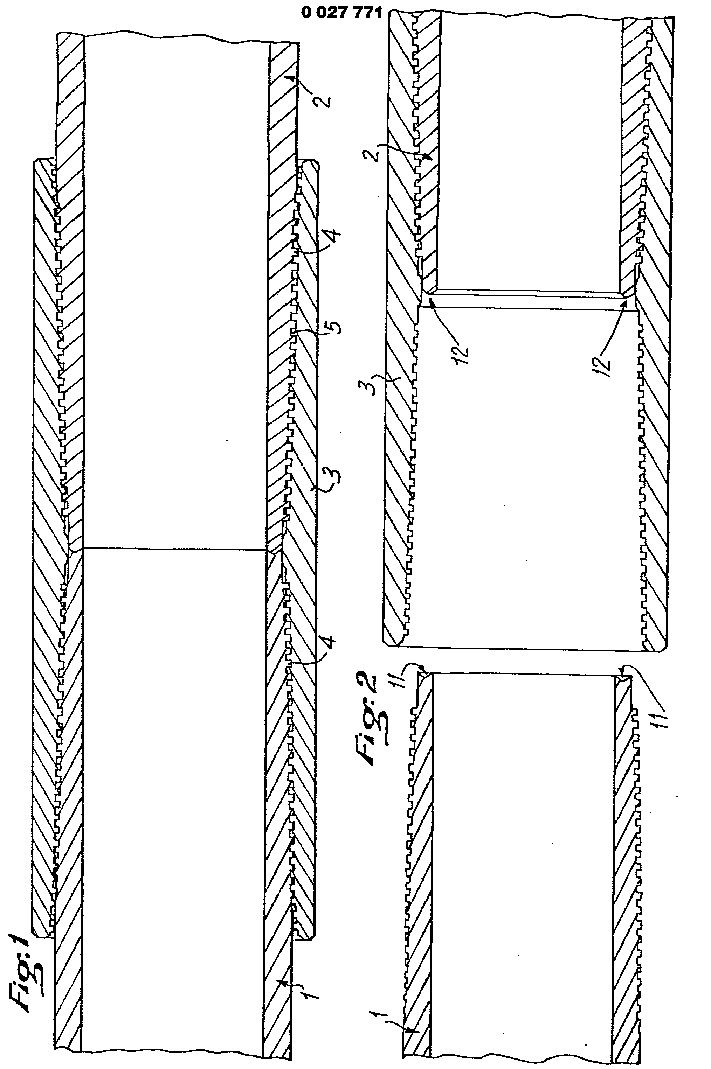

Les figures 1 et 2 représentent un joint selon l'invention réalisé entre deux éléments mâles 1 et 2 au moyen d'un manchon 3. Les filetages extérieurs coniques 4 sont prévus aux extrémités des éléments mâles 1 et 2 pour coopérer avec des filetages 5 correspondants ménagés à la surface intérieure du manchon. Ces filetages sont de préférence des filetages trapézoïdaux s'évanouissant à la surface extérieure des tubes.

Comme cela est représenté à plus grande échelle à la figure 5 le manchon 3 comporte en sa partie centrale une surface d'étanchéité femelle cylindrique 6 raccordée de part et d'autre avec la surface interne du manchon 3 par des surfaces incurvées 7.

Des surfaces d'étanchéité mâles 8 également cylindriques sont prévues à l'extérieur des extrémités 9 des éléments mâles 1 et 2. Le diamètre des surfaces d'étanchéité mâles 8 est égal ou légèrement supérieur au diamètre de la surface d'étanchéité femelle 6 du manchon 3 afin qu'aucun jeu n'existe entre les surfaces d'étanchéité lors de l'engagement des éléments mâles 1 et 2 dans le manchon 3. Cependant, le frettage, qui peut en résulter, ne doit pas être excessif afin d'éviter tout grippage.

On remarquera par ailleurs que dans la forme de réalisation décrite, les arêtes périphériques 10 des éléments mâles 1 et 2 sont légèrement arrondies. Pour plus de clarté, ces arrondis ont été exagérés sur le dessin. Dans la pratique, ces arrondis peuvent être inexistants ou être constitués par un tout petit chanfrein pour « casser » l'arête vive de l'extrémité des éléments mâles. Dans certains cas, ces arrondis peuvent prendre une certaine importance.

Dans le mode de réalisation des figures 1, 2 et 5, les surfaces de contact 11 et 12 des éléments mâles 1 et 2 sont constituées chacune par une première surface conique externe, 16', 17' et une seconde surface conique interne 16, 17, dont la conicité est orientée en sens inverse.

A titre d'exemple, l'angle d'inclinaison a de la surface 16' de l'élément 1 est égal à 10°, alors que l'angle d'inclinaison b de la surface 17' de l'élément 2 est égal à 5°. En ce qui concerne les surfaces coniques intérieures, les angles d'inclinaison c et d des surfaces coniques 16 et 17 des éléments 1 et 2 peuvent être par exemple tous deux égaux à 10°.

Dans le mode de réalisation représenté, et pour une raison qui sera expliquée ci-après, les arêtes 14 et 15 formées par les surfaces 16 et 16' d'une part et 17 et 17' d'autre part, sont décalées d'une distance h dans le sens radial.

On conçoit que, lorsque les extrémités ainsi constituées des éléments mâles 1 et 2 sont rapprochées l'une de l'autre, le premier contact s'effectue sur la périphérie externe des surfaces 16' et 17'. Au fur et à mesure que s'accroît la pression axiale sur les extrémités des éléments mâles, le jeu 13 existant entre les surfaces 16, 16' et 17, 17' se réduit jusqu'à ce que les surfaces 16 et 17 viennent au contact l'une de l'autre pour assurer une limitation du vissage.

On comprend que le décalage radial h des arêtes 14 et 15 permet d'assurer une limitation du vissage franche par le contact des surfaces 16 et 17. Dans le mode de réalisation décrit le décalage h a une valeur de 1 mm et une épaisseur à l'extrémité des tubes d'environ 10 à 20 mm.

Le montage du joint selon l'invention est effectué de la façon suivante :

Comme montré à la figure 2 le manchon 3 est vissé tout d'abord sur l'extrémité d'un des éléments mâles, par exemple de l'élément mâle 2. Il peut éventuellement y être assujetti par exemple par collage.

Ce montage peut avantageusement être réalisé en usine alors que le montage de l'extrémité de l'élément mâle 1 dans le manchon 3 (figure 1) est effectué sur le chantier, avec un couple de serrage inférieur à celui de l'élément mâle 2 si celui-ci n'est pas assuré sur le manchon.

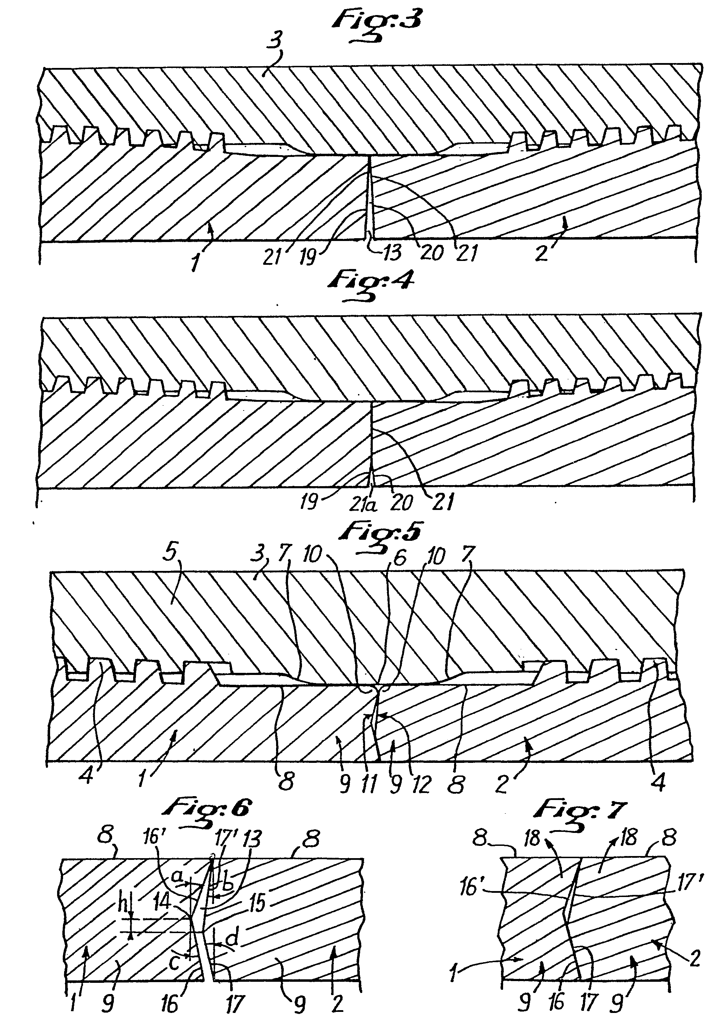

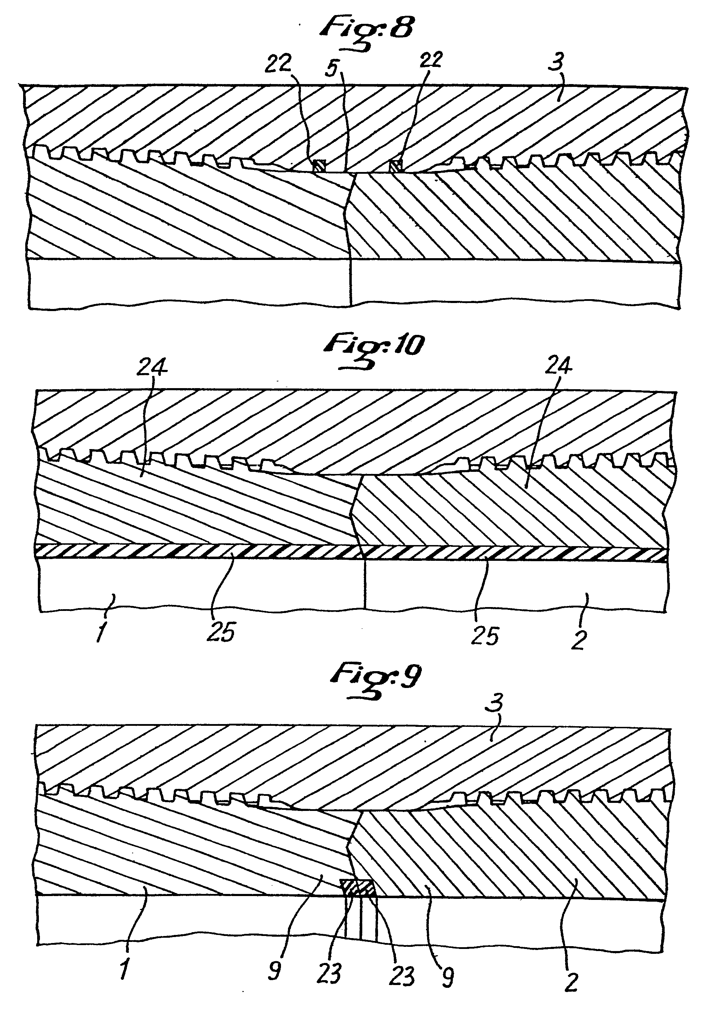

On comprend que lorsque l'on effectue l'assemblage de l'élément mâle 1 dans le manchon 3 le premier contact entre les surfaces de contact des extrémités des éléments mâles 1 et 2 s'effectue à la périphérie extérieure comme cela est montré à la figure 6. Lorsque le serrage est poursuivi il se produit à cette périphérie un matage d'où il résulte que les éléments mâles 1 et 2 continuent à se rapprocher jusqu'à ce que les surfaces de contact radialement intérieures 16 et 17 respectivement viennent en contact comme cela est représenté à la figure 7. Du fait du décalage h il en résulte un phénomène de butée de sorte que le serrage ne peut pas être poursuivi.

Lors de ce serrage les parois des extrémités 9 des éléments mâles 1 et 2 ont tendance, par un effet de genouillère, à se déplacer radialement vers l'extérieur comme cela est illustré par les flèches 18. Par conséquent les surfaces d'étanchéité mâles 8 viennent se plaquer sur la surface d'étanchéité femelle 6 du manchon 3 d'où il résulte une amélioration de l'étanchéité.

Les figures 3 et 4 représentent une autre forme de réalisation dans laquelle le premier contact des éléments mâles 1 et 2 est toujours prévu à la périphérie extérieure de ces tubes. De même que précédemment, l'espace 13 va en s'élargissant depuis la périphérie extérieure jusqu'à la périphérie intérieure des éléments mâles. Cependant dans ce cas les surfaces de contact 19 et 20 des extrémités des éléments mâles 1 et 2 sont des surfaces coniques concaves c'est-à-dire des surfaces coniques dont le sommet est situé sur l'axe des tubes 1 et 2 à l'intérieur de ces éléments mâles.

Comme cela a été mentionné ci-dessus lorsque l'élément mâle 1 est vissé dans le manchon 3 le premier contact entre les extrémités des éléments mâles 1 et 2 s'effectue à la périphérie extérieure 21 des surfaces 19 et 20 (figure 3). Lorsque l'on serre l'assemblage il se produit alors un matage dans la zone périphérique extérieur 21 des surfaces 19 et 20 (figure 4) de sorte que les surfaces 19 et 20 se rapprochent jusqu'à ce qu'elles viennent en contact pour réaliser une butée comme les surfaces 16 et 17 de la forme de réalisation précédente.

En position serrée du joint le matage des extrémités des éléments mâles qui s'effectue par déformation élastique et éventuellement plastique du métal amène en contact la totalité des surfaces 19 et 20 des extrémités des éléments mâles, ou laisse éventuellement substister un faible jeu 21a qui ne concerne qu'une partie des surfaces 19 et 20 comme cela a été représenté sur la figure 4 d'une manière très exagérée pour la clarté du dessin.

On comprend que l'importance du jeu 21a dépend de l'inclinaison des surfaces 19 et 20 et du serrage du joint. Dans la plupart des cas, il est préférable que ce jeu soit réduit à rien ou presque rien mais l'existence d'un tel jeu est compatible avec la mise en œuvre de l'invention.

On pourra choisir par exemple pour les angles entre les génératrices des surfaces coniques et les plans radiaux des valeurs de l'ordre de 15 minutes à 30 minutes.

La figure 8 représente une variante dans laquelle deux anneaux d'étanchéité toriques de PTFE 22 sont logés dans des gorges annulaires prévues de part et d'autre de la surface d'étanchéité femelle 5 du manchon 3.

Une autre variante est représentée à la figure 9 dans laquelle des bagues de PTFE 23 sont logées dans des renfoncements prévus à cet effet à la périphérie interne des extrémités 9 des éléments mâles 1 et 2.

Dans un autre mode de réalisation il n'est prévu qu'une seule bague en PTFE qui est de préférence placée à l'extrémité de l'élément mâle 1.

Dans l'une ou l'autre de ces deux variantes la présence du PTFE permet d'obtenir une étanchéité additionnelle.

La figure 10 représente une forme de réalisation dans laquelle les éléments mâles 1 et 2 sont des tubes bimétalliques dont la partie extérieure 24 est réalisée par exemple en acier ordinaire tandis que la partie intérieure 25 est réalisée par exemple en acier inoxydable.

Etant donné le contact réalisé entre les surfaces 16 et 17 (figures 6 et 7) des éléments mâles 1 et 2 on comprend que le contact entre les deux surfaces d'acier inoxydable 25 des éléments mâles 1 et 2 est étanche. Il en résulte que le fluide circulant à l'intérieur du joint ne pourra pénétrer entre les surfaces 16 et 17 et ne pourra atteindre les zones des éléments 1 et 2 réalisées en acier ordinaire.

Dans une variante préférée de ce mode de réalisation, les extrémités frontales 19 et 20 des éléments mâles sont revêtues d'un métal inoxydable identique ou compatible avec celui qui constitue la partie intérieure 25 des éléments mâles.

La présente invention a été décrite en se référant à des surfaces d'étanchéité cylindriques tant sur le manchon que sur les extrémités des éléments mâles. Bien que cette forme cylindrique pour les surfaces d'étanchéité soit la forme préférée selon l'invention, l'on ne s'écarterait pas de l'esprit de cette dernière en réalisant les surfaces d'étanchéité avec des formes très légèrement coniques qui ne s'écarteraient pas sensiblement d'une forme cylindrique. Dans cette hypothèse, il est clair que les éléments mâles devraient avoir à leur extrémité leur surface d'étanchéité présentant une conicité de même sens que la conicité de leur filetage.

Par ailleurs, la présente invention a été décrite en se référant à des joints possédant des filetages coniques.

On comprend que, compte tenu du fait que l'étanchéité du joint est obtenue selon l'invention par arc-boutement des surfaces d'étanchéité au voisinage du point de contact des extrémités des éléments mâles, la forme des filetages n'est pas déterminante dans la mesure où les filetages ont essentiellement pour objet d'exercer des forces axiales convergentes sur les extrémités des éléments mâles. On pourrait ainsi dans certains cas et sans s'écarter de l'esprit de l'invention, utiliser des joints présentant des filetages cylindriques ou des combinaisons de filetages cylindriques et tronconiques lorsque cela serait en particulier nécessaire pour réduire l'épaisseur totale du joint.

**Revendications**

1. Joint pour tubes du type dans lequel les extrémités munies d'un filetage, par exemple conique (4, 5), de deux éléments mâles (1, 2) sont réunies par un manchon (3) présentant de chaque côté un filetage correspondant et comportant dans sa partie centrale une surface interne d'étanchéité (6) sensibillement cylindrique dont l'axe correspond à l'axe du joint, chaque élément mâle (1, 2) possédant à la périphérie latérale de son extrémité une surface d'étanchéité (8) sensiblement cylindrique dont le diamètre est égal ou légèrement supérieur au diamètre de la surface interne d'étanchéité (6) du manchon, caractérisé par le fait que les extrémités frontales des éléments mâles (1, 2) viennent prendre appui axialement l'une contre l'autre par leurs périphéries externes (21) lors du serrage du joint et que l'espace (13) existant lors de leur premier contact entre les zones extérieures (16', 17' ; 21) des surfaces de contact (16-16', 17-17' ; 19, 20) desdites extrémités frontales est tel que l'espacement axial entre ces zones extérieures va en croissant de la périphérie vers l'axe du joint.

2. Joint selon la revendication 1, caractérisé par le fait que la surface d'extrémité frontale (19, 20) de chacun des éléments mâles est légèrement conique concave.

3. Joint selon la revendication 1, caractérisé par le fait que les surfaces d'extrémité frontales des éléments mâles ont une forme biconique, la zone périphérique (16', 17') des extrémités frontales des éléments mâles ayant une conicité dirigée en sens inverse de la conicité de la zone interne (16, 17) et les conicités des zones périphériques des extrémités frontales des deux éléments mâles (1, 2) étant telles que le premier contact entre les extrémités frontales des éléments mâles s'effectue à la périphérie de ces dernières.

4. Joint selon l'une quelconque des revendications 1 à 3, caractérisé par le fait que la surface interne d'étanchéité (6) sensiblement cylindrique du manchon se prolonge en direction de chaque filetage (4) par une surface (7) dont le diamètre s'élargit progressivement.

5. Joint selon l'une quelconque des revendications 1 à 4, caractérisé par le fait que l'arête externe (10) de l'extrémité frontale de chaque élément mâle est légèrement arrondie.

6. Joint selon l'une quelconque des revendications 1 à 5, caractérisé par le fait qu'il comprend deux anneaux toriques d'étanchéité (22) disposés dans des gorges circulaires réalisées sur la surface cylindrique d'étanchéité interne (6) du manchon de part et d'autre du point où les extrémités frontales des éléments mâles viennent en contact.

7. Joint selon l'une quelconque des revendications 1 à 6, caractérisé par le fait qu'il comporte une bague d'étanchéité (23) disposée dans une gorge pratiquée au voisinage de l'arête interne de l'extrémité frontale d'au moins un des éléments mâles.

8. Joint selon l'une quelconque des revendications précédentes, caractérisé par le fait que les éléments mâles sont réalisés avec des tubes bimétalliques, la partie du tube (25) voisine de l'intérieur étant en métal inoxydable.

9. Joint selon la revendication 8, caractérisé par le fait que les extrémités frontales des éléments mâles sont recouvertes d'un métal inoxydable identique ou compatible avec celui qui constitue l'intérieur des éléments mâles.

**Claims**

1. A pipe joint of the type wherein the ends provided with a conical thread for instance (4, 5), of two male elements (1, 2) are joined by a sleeve (3) having on each side a corresponding thread and comprising in its central portion, a substantially cylindrical internal sealing surface (6) whose axis corresponds to the axis of the joint, each male element (1, 2) having, at the lateral periphery of its end a substantially cylindrical sealing surface (8) whose diameter is equal to or slightly greater than the diameter of the internal sealing surface (6) of the sleeve, characterised in that the front ends of the male elements (1, 2) come to bear axially one against the other by their external peripheries (21) when the joint is tightened and that the space (13) existing during their first contact between the external zones (16', 17', 21) of the contact surfaces (16-16', 17-17' ; 19, 20) of the said front ends is such that the axial spacing between these external zones comes to increase from the periphery towards the joint axis.

2. A joint according to Claim 1, characterised in that the front end surface (19, 20) of each one of the male elements has a slight conical concavity.

3. A joint according to Claim 1, characterised in that the front end surfaces of the male elements have a biconical shape, the peripheral zone (16', 17') of the front ends of the male elements having a conicity directed in the reverse direction to the conicity of the internal zone (16, 17) and the conicities of the peripheral zones of the front ends of the two male elements (1, 2) being such that the first contact between the front ends of the male elements is effected at the periphery of the latter.

4. A joint according to any one of Claims 1 to 3, characterised in that the substantially cylindrical internal sealing surface (6) of the sleeve is extended towards each thread (4) via a surface (7) whose diameter does progressively increase.

5. A joint according to any one of Claims 1 to 4, characterised in that the external edge (10) of the front end of each male element is slightly rounded.

6. A joint according to any one of Claims 1 to 5, characterised in that it comprises two sealing O rings (22) disposed in circular grooves obtained in the internal cylindrical sealing surface (6) of the sleeve on either side of the point where the front ends of the male elements come into contact.

7. A joint according to any one of Claims 1 to 6, characterised in that it comprises a sealing ring (23) disposed in a groove cut near the internal edge of the front end of at least one of the male elements.

8. A joint according to any one of the preceding Claims, characterised in that the male elements are made of bimetallic pipes, the part of pipe (25) adjoining the interior being made of an unoxidizable metal.

9. A joint according to Claim 8, characterised in that the front ends of the male elements are covered with an unoxidizable metal identical or compatible with that which constitutes the interior of the male elements.

**Ansprüche**

1. Rohrverbindung, bei der die mit — beispielsweise konischen — Gewinden (4, 5) versehenen Enden zweier Bolzenelemente (1, 2) mittels einer auf jeder Seite ein entsprechendes Gewinde aufweisenden Muffe (3) vereinigt werden, die im zentralen Bereich mit einer im wesentlichen zylindrischen inneren Dichtfläche (6) versehen ist, deren Achse der Verbindungsachse entspricht, wobei jedes Bolzenelement an der seitlichen Umfangsfläche seines Endes eine im wesentlichen zylindrische Dichtungsfläche (8) aufweist, deren Durchmesser gleich oder geringfügig größer ist als der Durchmesser der inneren Dichtfläche (6) der Muffe, dadurch gekennzeichnet, daß die Stirnenden der Bolzenelemente (1, 2) im Zuge des Festspannens der Verbindung mit ihren äusseren Randbereichen (21) axial gegeneinander zum Anschlag kommen und daß der beim ersten Kontakt sich ergebende Zwischenraum (13) zwischen den Außenbereichen (16', 17' ; 21) der Kontaktflächen (16-16', 17-17' ; 19, 20) der Stirnenden so verläuft, daß der axiale Abstand der Außenbereiche vom Umfang in Richtung auf die Achse der Verbindung zunimmt.

2. Verbindung nach Anspruch 1, dadurch gekennzeichnet, daß die Kontaktfläche (19, 20) der Stirnenden jedes Bolzenelementes leicht konisch konkav verläuft.

3. Verbindung nach Anspruch 1, dadurch gekennzeichnet, daß die Kontaktflächen der Stirnenden der Bolzenelemente eine bikonische Gestalt haben, wobei die Außenbereiche (16', 17') der Stirnenden der Bolzenelemente eine Konizität aufweisen, die entgegengesetzt zur Konizität der Innenbereiche (16, 17) ist, und daß die Konizität der Außenbereiche der Stirnenden der beiden Bolzenelemente (1, 2) so verläuft, daß der erste Kontakt der Stirnenden der Bolzenelemente am Umfang derselben stattfindet.

4. Verbindung nach einem der Ansprüche 1 bis 3, dadurch gekennzeichnet, daß sich die im wesentlichen zylindrische innere Dichtfläche (6) der Muffe in Richtung auf jedes Gewinde (4) in eine Fläche (7) fortsetzt, deren Durchmesser sich progressiv erweiter.

5. Verbindung nach einem der Ansprüche 1 bis 4, dadurch gekennzeichnet, daß die außenseitige Spitze (10) des Stirnendes jedes Bolzenelementes leicht abgerundet ist.

6. Verbindung nach einem der Ansprüche 1 bis 5, dadurch gekennzeichnet, daß sie zwei Dichtringe (22) aufweist, die in kreisförmigen Ausnehmungen der inneren zylindrischen Dichtfläche (6) der Muffe angeordnet sind, die beiderseits der Stelle verlaufen, wo die Stirnenden der Bolzenenden in Kontakt miteinander kommen.

7. Verbindung nach einem der Ansprüche 1 bis 6, dadurch gekennzeichnet, daß sie einen Dichtring (23) trägt, der in eine Ausnehmung eingesetzt ist, die sich in der Nachbarschaft der inneren Kante des Stirnendes mindestens eines der Bolzenelemente befindet.

8. Verbindung nach einem der vorhergehenden Ansprüche, dadurch gekennzeichnet, daß die Bolzenelemente aus bimetallischen Rohren bestehen, wobei der Teil (25) des Rohres, der der Innenseite desselben benachbart ist, aus einem nichtoxydierenden Metall besteht.

9. Verbindung nach Anspruch 8, dadurch gekennzeichnet, daß die Stirnenden der Bolzenelemente mit einem nichtoxydierenden Metall überzogen sind, welches mit dem Metall, welches die Innenseite der Bolzenelemente bildet, übereinstimmt oder mit diesem verträglich ist.

Fig.1

Fig.2

Fig.3

1

0 027 771

*Fig:3*

*Fig:4*

*Fig:5*

*Fig:6*

*Fig:7*

2

*Fig.8*

22   5   22   3

*Fig.10*

24   24

1   25   25   2

*Fig.9*

3

1   9   23   23   9   2

3